# EUROPEAN PATENT APPLICATION

(11) **EP 3 531 507 A1**
(43) Date of publication of application: **28.08.2019**
(21) Application number: 17864406.8
(22) Date of filing: 24.10.2017
(51) Int. Cl.: H01Q 15/14, H01Q 1/24, H01Q 1/52, H04B 1/525

(54) **COMMUNICATION DEVICE**

(30) Priority: 24.10.2016 JP 2016208177
(71) Applicant: Kyocera Corporation, Kyoto-shi, Kyoto 612-8501 (JP)
(72) Inventor: FUKUOKA, Yasuhiko, Kyoto-shi Kyoto 612-8501 (JP); ISOYAMA, Shinji, Kyoto-shi Kyoto 612-8501 (JP); HIRAMATSU, Nobuki, Kyoto-shi Kyoto 612-8501 (JP)
(74) Representative: Viering, Jentschura & Partner mbB Patent- und Rechtsanwälte
(86) International application number: PCT/JP2017/038343
(87) International publication number: WO 2018/079543

(57) **Abstract**

A communication apparatus includes an antenna, a wireless module that supplies power to the antenna to cause the antenna to emit electromagnetic waves having a predetermined frequency band, a structural member having a conductor surface on at least a portion thereof, and at least one resonator including a plurality of unit conductors and having a resonance frequency band that includes a resonance frequency. The at least one resonator is positioned between the conductor surface and the antenna. The predetermined frequency band is included in the resonance frequency band.

## Description

### CROSS-REFERENCE TO RELATED APPLICATION

The present application claims priority to and the benefit of Japanese Patent Application No. 2016-208177 filed October 24, 2016, the entire contents of which are incorporated herein by reference.

### TECHNICAL FIELD

The present disclosure relates to a communication apparatus.

### BACKGROUND

In some known communication apparatuses, an antenna is disposed so as not to overlap a battery. For example, see patent literature (PTL) 1.

### CITATION LIST

### Patent Literature

PTL 1: JP2015-7815A

### SUMMARY

A communication apparatus according to an embodiment of the present disclosure includes an antenna and a wireless module configured to supply power to the antenna to cause the antenna to emit electromagnetic waves having a predetermined frequency band. The communication apparatus includes at least one structural member, which has a conductor surface on at least a portion thereof, and includes at least one resonator. The resonator includes a plurality of unit conductors. The resonator has a resonance frequency band that includes a resonance frequency. The at least one resonator is positioned between the conductor surface and the antenna. The predetermined frequency band is included in the resonance frequency band.

### BRIEF DESCRIPTION OF THE DRAWINGS

In the accompanying drawings:
FIG. 1 is a perspective view of an example of the appearance of a communication apparatus according to an embodiment;
FIG. 2A is a front view of the communication apparatus in FIG. 1;
FIG. 2B is a cross-section along the A-A line in FIG. 2A;
FIG. 3 is a block diagram schematically illustrating an example configuration of a communication apparatus according to an embodiment;
FIG. 4 illustrates an example of transmission waves being reflected by a resonator;
FIG. 5 is a graph illustrating the frequency characteristics of the phase difference between transmission waves and reflected waves;
FIG. 6 is a graph illustrating the frequency characteristics of the intensity ratio of reflected waves to transmission waves;
FIG. 7A illustrates an example of unit conductors, included in a resonator, that have a patch-like pattern;
FIG. 7B illustrates an example of unit conductors, included in a resonator, that have a loop-like pattern;
FIG. 7C illustrates an example of unit conductors, included in a resonator, that have a cross-like pattern;
FIG. 8 illustrates reflection of transmission waves in a communication apparatus according to a Comparative Example;
FIG. 9A is an example of a plan view of a communication apparatus according to an embodiment;
FIG. 9B is a cross-section along the B-B line in FIG. 9A;
FIG. 10A is an example of a plan view of a communication apparatus according to an embodiment;
FIG. 10B is a cross-section along the C-C line in FIG. 10A;
FIG. 11A is an example of a plan view of a communication apparatus according to an embodiment;
FIG. 11B is a cross-section along the D-D line in FIG. 11A;
FIG. 12A is an example of a plan view of a communication apparatus according to an embodiment; and
FIG. 12B is a cross-section along the E-E line in FIG. 12A.

### DETAILED DESCRIPTION

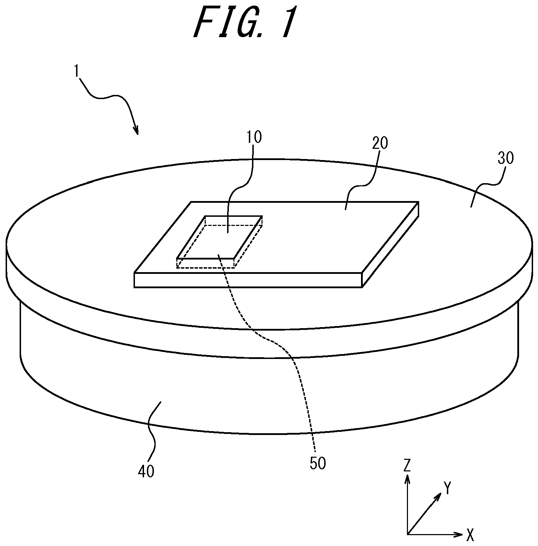

When a communication apparatus 1 (see FIG. 1) has a built-in flat battery 40 (see FIG. 1), such as a button cell, the communication apparatus 1 may become larger than the battery 40 as a result of an antenna 10 (see FIG. 1) being arranged not to overlap the battery 40. This makes it difficult to reduce the communication apparatus 1 in size.

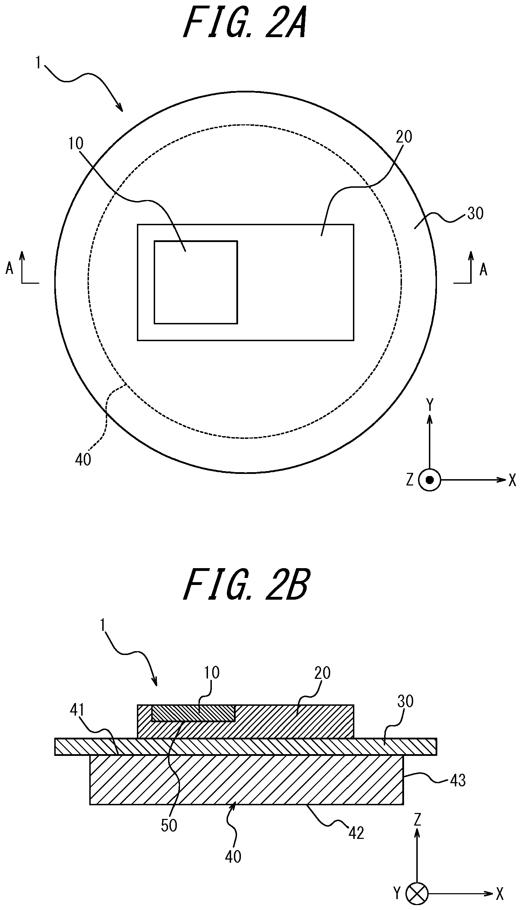

The communication apparatus 1 according to an embodiment includes an antenna 10, a wireless module 20, and a battery 40, as illustrated in FIG. 1 and in FIGS. 2A and 2B.

The communication apparatus 1 may include various structural members, such as a heat sink and a shield. The battery 40 may be included in a structural member. The battery 40 may, for example, be a button cell, a coin cell, or the like. The battery 40 may also be a rechargeable battery. The battery 40 in the example in FIG. 2B includes a first surface 41, a second surface 42, and a side surface 43. The first surface 41 is positioned on the side in the positive direction of the Z-axis, and the second surface 42 is positioned on the side in the negative direction of the Z-axis. In other words, the first surface 41 and the second surface 42 are positioned on opposite sides of the battery 40. The side surface 43 is ring-shaped and is positioned between the first surface 41 and the second surface 42. The distance between the first surface 41 and the second surface 42 is also referred to as the height of the battery 40. The area of the first surface 41 or the second surface 42 in plan view, when looking at the battery 40 in plan view from the positive or negative direction of the Z-axis, is also referred to as the surface size of the battery 40. The surface size of the battery 40 may be the maximum dimension of the first surface 41 or the second surface 42. In the present embodiment, the surface size of the battery 40 refers to whichever is larger in a comparison with the height of the battery 40.

The communication apparatus 1 may further include a substrate 30. The substrate 30 may have a shape that is the same as, or similar to, the shape of the first surface 41 of the battery 40. The antenna 10 and the wireless module 20 may be mounted on the substrate 30.

The substrate 30 may be positioned to overlap the first surface 41 of the battery 40 in plan view from the height direction of the battery 40. The substrate 30 may be positioned alongside the battery 40 in the height direction of the battery 40. The battery 40 may occupy a larger area in the communication apparatus 1 than other components of the communication apparatus 1 in plan view of the communication apparatus 1 from the Z-axis direction. The size of the communication apparatus 1 in plan view of the communication apparatus 1 from the Z-axis direction is also referred to as the surface size of the communication apparatus 1. The surface size of the battery 40 may be considered to occupy the majority of the surface size of the communication apparatus 1. The surface size of the communication apparatus 1 can be reduced by positioning the substrate 30 to overlap the first surface 41 or the second surface 42, which define the surface size of the battery 40, in the Z-axis direction.

The antenna 10 emits electromagnetic waves on the basis of power that includes inputted current or voltage. The antenna 10 may be included in the wireless module 20. The antenna 10 may be separate from the wireless module 20. The antenna 10 may be mounted on the substrate 30. The antenna 10 may be mounted on the first surface 41 of the battery 40. The antenna 10 may be a conductor located on the substrate 30. The antenna 10 may be a conductor located within the substrate 30. The antenna 10 may be a chip antenna located on the substrate 30. The antenna 10 may be a metal sheet antenna located on the substrate 30.

The wireless module 20 supplies power including current or voltage to the antenna 10 to cause the antenna 10 to emit electromagnetic waves. The wireless module 20 may be mounted on the substrate 30. The wireless module 20 may be mounted on the first surface 41 of the battery 40.

At least a portion of the surface of the battery 40 may have the property of a conductor with high electric conductivity. The conductor may include a material whose electric conductivity decreases with an increase in temperature. The conductor may include a metal. The conductor may include gold, silver, copper, platinum, nickel, cadmium, lead, selenium, manganese, tin, vanadium, or lithium. The surface having conductive properties is also referred to as a conductor surface. In the present embodiment, the first surface 41 of the battery 40 is assumed to be the conductor surface. The first surface 41 is also referred to below as a conductor surface 41. The conductor surface 41 is assumed to be grounded. The structural member including the battery 40 can also be considered to have a conductor surface in at least a portion thereof.

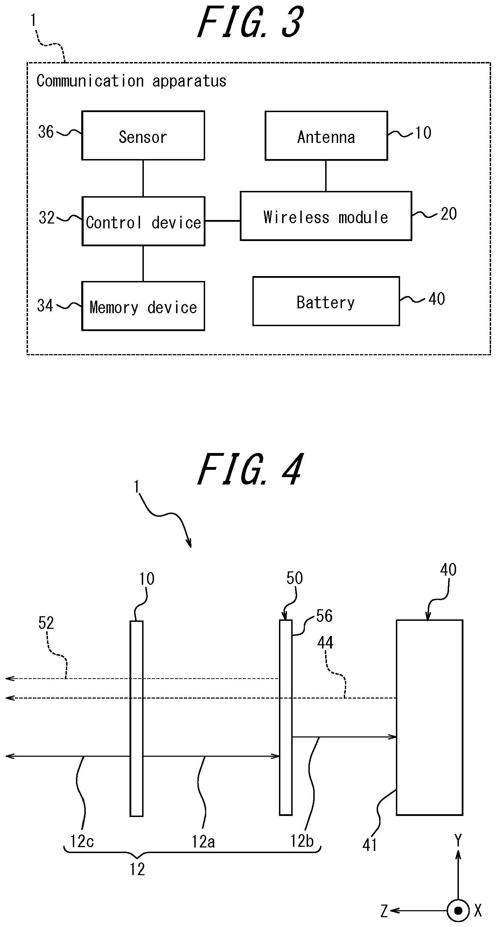

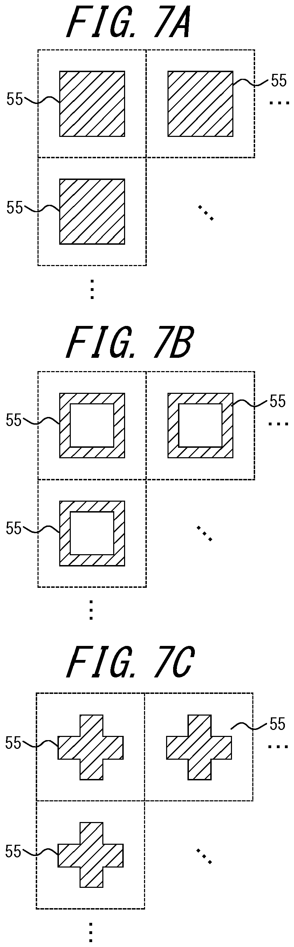

The antenna 10 may be positioned to overlap the conductor surface 41 in plan view from the Z-axis direction. The communication apparatus 1 further includes a resonator 50 between the antenna 10 and the conductor surface 41. The resonator 50 resonates in response to incidence of the electromagnetic waves. The resonator 50 includes unit conductors 55 (see FIGS. 7A, 7B, and 7C) that reflect the electromagnetic waves and a conductor layer 56 (see FIG. 4) on the side closer to the battery 40 than the unit conductors 55. A conductor may be embedded in all or a portion of the resonator 50 as the conductor layer 56. The resonator 50 can reflect the electromagnetic waves emitted from the antenna 10. The electromagnetic waves emitted from the antenna 10 are also referred to as transmission waves 12 (see FIG. 4). When the resonator 50 reflects the transmission waves 12, the transmission waves 12 tend not to reach the conductor surface 41. When the conductor layer 56 is formed by a conductor embedded in all of the resonator 50, the transmission waves 12 are completely reflected by the resonator 50 and do not reach the conductor surface 41.

The antenna 10 may be located on the substrate 30 or within the substrate 30. The resonator 50 may be positioned closer to the battery 40 than the conductor that forms the antenna 10. In plan view from the height direction of the battery 40, the resonator 50 may be located in a wider range than the conductor that forms the antenna 10. In plan view from the height direction of the battery 40, at least a portion of the resonator 50 may be located around the antenna 10.

The resonator 50 may be provided in the wireless module 20. The resonator 50 may be provided in the substrate 30. The resonator 50 may be provided on the first surface 41 of the battery 40. When one resonator 50 is provided, the resonator 50 may be located in one of the antenna 10, the wireless module 20, the substrate 30, and the battery 40. When a plurality of resonators 50 is provided, the resonators 50 may be located in one or more of the antenna 10, the wireless module 20, the substrate 30, and the battery 40. The resonators 50 may be positioned to overlap each other in plan view from the Z-axis direction. The resonators 50 may be positioned to overlap each other at least partially in plan view from the Z-axis direction. The resonators 50 may be positioned not to overlap each other in plan view from the Z-axis direction. At least a portion of the resonators 50 may be positioned to overlap the antenna 10 in plan view from the Z-axis direction. The resonators 50 may each have a different size in plan view from the Z-axis direction.

As illustrated in FIG. 3, the communication apparatus 1 may further include a control device 32, a memory device 34, and a sensor 36. The control device 32, the memory device 34, and the sensor 36 may be mounted on the substrate 30. The control device 32 may be communicably connected to the wireless module 20, the memory device 34, and the sensor 36. The antenna 10 may be electrically connected to the wireless module 20. The battery 40 can supply power to each component of the communication apparatus 1.

The control device 32 generates a transmission signal to transmit from the communication apparatus 1. The control device 32 acquires measurement data from the sensor 36, for example. The control device 32 may generate the transmission signal on the basis of the measurement data.

The control device 32 may, for example, be configured by a processor. The control device 32 may include one or more processors. The term "processor" encompasses universal processors that execute particular functions by reading particular programs and dedicated processors that are specialized for particular processing. The dedicated processor may include an application specific integrated circuit (ASIC). The processor may include a programmable logic device (PLD). The PLD may include a field-programmable gate array (FPGA). The control device 32 may be either a system-on-a-chip (SoC) or a system in a package (SiP) with one processor or a plurality of processors that work together. The control device 32 may store various information, programs for operating the components of the communication apparatus 1, and the like in the memory device 34.

The memory device 34 may, for example, be a semiconductor memory. The memory device 34 may function as a working memory of the control device 32. The memory device 34 may be included in the control device 32.

The sensor 36 may, for example, include a speed sensor, an acceleration sensor, a gyro sensor, a rotation angle sensor, an illuminance sensor, a geomagnetic sensor, a temperature sensor, a humidity sensor, a barometric pressure sensor, a global positioning system (GPS) signal receiver, or the like.

The wireless module 20 may include a device capable of wireless communication by Bluetooth® (Bluetooth is a registered trademark in Japan, other countries, or both), a wireless local area network (LAN), or the like, for example. The wireless module 20 may include a processor. The wireless module 20 may include a digital signal processing (DSP) circuit. The wireless module 20 may be configured to be capable of executing the functions of the control device 32. The wireless module 20 may include the control device 32. The wireless module 20 may include the memory device 34.

The wireless module 20 may acquire the transmission signal from the control device 32. The wireless module 20 may generate the transmission signal. The wireless module 20 can supply power based on the transmission signal to the antenna 10 and cause the antenna 10 to emit the transmission waves 12. The wireless module 20 can supply power to the antenna 10 via voltage or current. The transmission waves 12 can be generated by modulating a carrier wave of a predetermined frequency in accordance with a signal. The transmission waves 12 may have a predetermined frequency band. The predetermined frequency band may include the frequency of the carrier wave. When the frequency of the carrier wave is approximately 2.5 GHz, the width of the predetermined frequency band may be 1 MHz, 20 MHz, or the like. The width of the predetermined frequency band may be a value sufficiently smaller than the frequency of the carrier wave.

As illustrated in FIG. 4, the antenna 10 can emit at least a portion of the transmission waves 12 in the positive direction of the Z-axis and the negative direction of the Z-axis. In FIG. 4, the positive direction of the Z-axis is the direction from right to left. At least a portion of the transmission waves 12 can proceed in the negative direction of the Z-axis as transmission waves 12a. At least a portion of the transmission waves 12 proceeding in the negative direction of the Z-axis can proceed towards the conductor surface 41 of the battery 40. The transmission waves 12a can be incident on the resonator 50. At least a portion of the transmission waves 12a can pass through the resonator 50 to be incident on the conductor surface 41 of the battery 40 as transmission waves 12b. At least a portion of the transmission waves 12 can proceed in the positive direction of the Z-axis as transmission waves 12c.

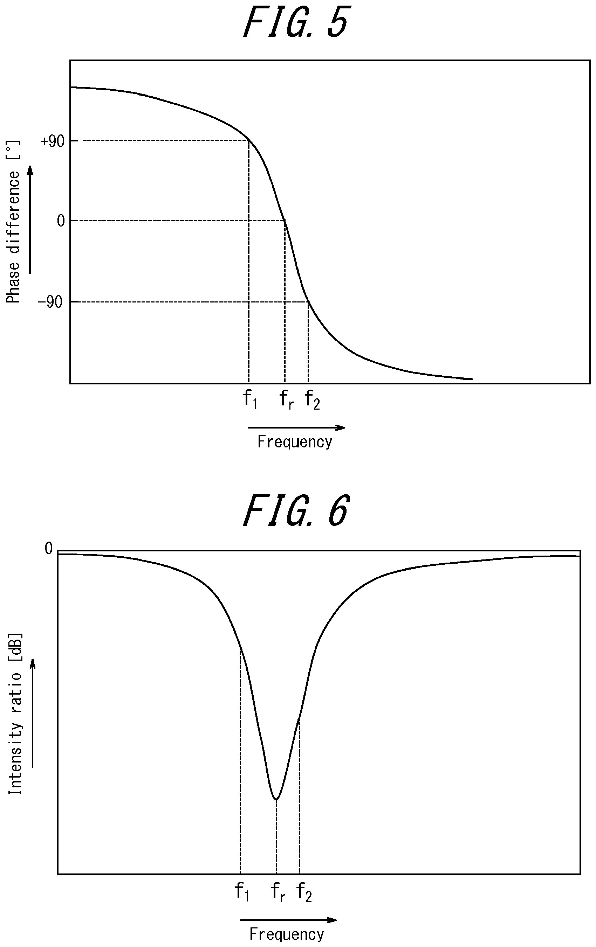

The transmission waves 12a incident on the resonator 50 can be reflected by the resonator 50 as reflected waves 52. The transmission waves 12a can cause the resonator 50 to resonate. The reflected waves 52 can be emitted from the resonator 50 by the resonance. In other words, the resonator 50 can reflect the transmission waves 12a as reflected waves 52. As illustrated in FIG. 5, the phase difference between the transmission waves 12a and the reflected waves 52 can have a frequency characteristic. The horizontal axis of FIG. 5 represents the frequency of the transmission waves 12a and the reflected waves 52. The vertical axis of FIG. 5 represents the phase difference between the transmission waves 12a and the reflected waves 52. In the present disclosure, the phase difference when observing the surface on the antenna 10 side of the resonator 50 is simply referred to as the "phase difference".

The resonator 50 has a resonance frequency. The resonance frequency is the frequency at which the phase difference between the transmission waves 12a and the reflected waves 52 becomes 0°. In FIG. 5, the resonance frequency is represented as fᵣ.

The resonator 50 has a resonance frequency band set as a predetermined frequency range. The resonance frequency band is the frequency band between a first frequency and a second frequency. The first frequency is the frequency at which the phase difference between the transmission waves 12a and the reflected waves 52 is +90°. The second frequency is the frequency at which the phase difference between the transmission waves 12a and the reflected waves 52 is -90°. The resonance frequency band is also referred to as the resonance frequency range. The predetermined frequency range includes the resonance frequency. In FIG. 5, the first frequency is represented as f₁, and the second frequency as f₂.

The phase difference between the transmission waves 12a and the reflected waves 52 can become 0° at the resonance frequency. The phase difference between the transmission waves 12a and the reflected waves 52 can approach 0° as the phase difference becomes closer to the resonance frequency. The phase difference between the transmission waves 12a and the reflected waves 52 can become 0°, or close to 0°, near the resonance frequency. The phase difference between the transmission waves 12a and the reflected waves 52 in a frequency band included in the resonance frequency band can be within a range of -90° to +90° at each frequency.

The width of the resonance frequency band determined on the basis of the first and second frequencies may, for example, be 100 MHz or more when the resonance frequency is approximately 2.5 GHz.

As illustrated in FIG. 6, the intensity ratio of the reflected waves 52 to the transmission waves 12a can have a frequency characteristic. The horizontal axis of FIG. 6 represents the frequency of the transmission waves 12a and the reflected waves 52. The vertical axis of FIG. 6 represents the intensity ratio of the reflected waves 52 to the transmission waves 12a. The intensity ratio is represented in units of decibels (dB). When the intensity ratio is 0 dB, the intensity of the reflected waves 52 is the same as the intensity of the transmission waves 12a. When the intensity ratio is less than 0 dB, the intensity of the reflected waves 52 is less than the intensity of the transmission waves 12a. In FIG. 6, the resonance frequency is represented as fᵣ. The first frequency is represented as f₁, and the second frequency as f₂.

The intensity ratio of the reflected waves 52 to the transmission waves 12a at the resonance frequency is smaller than the intensity ratio of the reflected waves 52 to the transmission waves 12a at other frequencies. The intensity ratio of the reflected waves 52 to the transmission waves 12a in the resonance frequency band is smaller than the intensity ratio of the reflected waves 52 to the transmission waves 12a at frequencies outside of the range of the resonance frequency band. The reduction in intensity ratio is caused by factors such as loss of current flowing at the time of resonance in the conductor included in the resonator 50.

The resonator 50 may include a plurality of the unit conductors 55. At least a portion of the unit conductors 55 can resonate at the resonance frequency of the resonator 50. At least a portion of the unit conductors 55 can resonate near the resonance frequency of the resonator 50. At least a portion of the unit conductors 55 can resonate near the resonance frequency (fr) of the resonator 50. FIGS. 7A, 7B, and 7C illustrate examples of the shape of the unit conductors 55 included in the resonator 50. FIG. 7A represents a patch-like pattern. FIG. 7B represents a loop-like pattern. FIG. 7C represents a cross-like pattern. One resonator 50 may include unit conductors 55 with a plurality of shapes. Each of a plurality of resonators 50 may include unit conductors 55 with a different shape.

The size of the unit conductors 55 can differ depending on the shape. The size of the unit conductors 55 may be a size that can resonate at the resonance frequency of the resonator 50 or at a frequency near the resonance frequency. A range of 1/10 to 1/20 of the wavelength of the transmission waves 12, for example, may be included in the sizes of the unit conductors 55. The unit conductors 55 may, for example, be a conductive material. The unit conductors 55 may, for example, be a thin film of metal.

The unit conductors 55 may be arranged in a two-dimensional array in one layer or in each of a plurality of layers. The unit conductors 55 may be arranged in a lattice in one layer or in each of a plurality of layers. The shape of the lattice is not limited to being square. The unit conductors 55 may be arranged in a lattice in one layer or in each of a plurality of layers. The unit conductors 55 may be aligned in a row in one layer or in each of a plurality of layers. The unit conductors 55 included in one resonator 50 may be aligned in a row in at least one layer and may be arranged in a lattice in at least one layer. The unit conductors 55 may be arranged one-dimensionally. The unit conductors 55 may be arranged two-dimensionally. The unit conductors 55 may be arranged cyclically. The regions surrounded by dashed lines in FIGS. 7A, 7B, and 7C represent the pitch when the unit conductors 55 are arrayed periodically. The unit conductors 55 may be arranged three-dimensionally. One resonator 50 may be a single-layer laminate in which the unit conductors 55 are arrayed two-dimensionally.

A structure in which an unlimited number of unit conductors 55 are arrayed cyclically in two dimensions can function as a frequency selective surface (FSS). The FSS can function as an artificial magnetic conductor (AMC) by being combined with an electrically grounded portion. The AMC can reflect incident electromagnetic waves at substantially the same phase.

The resonator 50 may be an FSS. When the resonator 50 is an FSS, the resonator 50 can function as an AMC by combination with the conductor surface 41 of the battery 40. The resonator 50 can function as an AMC by combination with a conductor included in the substrate 30. The resonator 50 can function as an AMC by combination with a different grounded portion than the conductor surface 41. The resonator 50 may include an electrically grounded portion.

The current flowing to the conductor included in the resonator 50 is large when the resonance is intense. When a large current flows to the conductor, the energy loss can increase due to resistance loss in the conductor. In other words, intense resonance can decrease the intensity of the reflected waves 52.

The transmission waves 12b incident on the conductor surface 41 of the battery 40 are reflected by the conductor surface 41 and emitted as reflected waves 44. The reflected waves 44 proceed in the positive direction of the Z-axis.

The phase difference between the reflected waves 44 and the transmission waves 12b is approximately 180°.

As the frequency of the transmission waves 12 is closer to the resonance frequency, more of the transmission waves 12a can be absorbed by the resonator 50 and resonate. As the frequency of the transmission waves 12 is closer to the resonance frequency, the amount of the transmission waves 12b passing through the resonator 50 can decrease. In other words, when the transmission waves 12 have a frequency included in the resonance frequency band of the resonator 50, the resonator 50 can reduce the transmittance of the transmission waves 12. The resonator 50 can prevent the transmission waves 12 that have a frequency included in the resonance frequency band from being directed towards the conductor surface 41 of the battery 40. The communication apparatus 1 may include a resonator 50 with one layer. The communication apparatus 1 may include a resonator 50 with two or more layers. The transmittance of the transmission waves 12 can be reduced further by increasing the number of layers of the resonator 50.

When the distance between the antenna 10 and the resonator 50 is short enough to be negligible relative to 1/4 of the wavelength of the transmission waves 12, the phase of the reflected waves 52 at the resonator 50 may be considered to be the same as the phase of the reflected waves 52 reaching the antenna 10. In this case, the phase difference between the transmission waves 12c proceeding in the positive direction of the Z-axis and the reflected waves 52 that reach the antenna 10 and continue in the same direction as the transmission waves 12c can be within a range of -90° to +90°. Consequently, the transmission waves 12c and the reflected waves 52 can proceed in the positive direction of the Z-axis without weakening each other.

When the frequency of the transmission waves 12 is 2.5 GHz, 1/4 of the wavelength of the transmission waves 12 is approximately 30 mm. The distance between the antenna 10 and the resonator 50 may, for example, be 1 mm or less. In this case, the distance between the antenna 10 and the resonator 50 tends not to impede a reduction in size of the communication apparatus 1.

The transmission waves 12 can have a predetermined frequency band. When the resonance frequency band of the resonator 50 includes a predetermined frequency band, the phase difference between the transmission waves 12a and the reflected waves 52 can be in a range of -90° to +90° at each frequency component of the transmission waves 12. The transmission waves 12 in this case can proceed in the positive direction of the Z-axis without being weakened by the reflected waves 52.

At least a portion of the frequency components of the transmission waves 12 can resonate at the resonator 50 when the resonance frequency of the resonator 50 is included in a predetermined frequency band. The width of the resonance frequency band tends to be larger than the width of the predetermined frequency band of the transmission waves 12. When the resonance frequency band is wider than the width of the predetermined frequency band of the transmission waves 12, the phase difference between the transmission waves 12a and the reflected waves 52 can be in a range of -90° to +90° at each frequency component of the transmission waves 12. The transmission waves 12 in this case can proceed in the positive direction of the Z-axis without being weakened by the reflected waves 52.

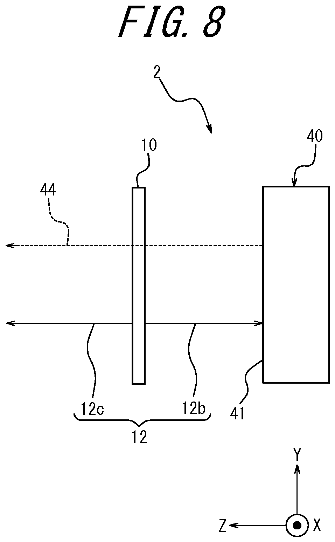

As illustrated in FIG. 8, a communication apparatus 2 according to a Comparative Example does not include the resonator 50. No transmission waves 12a are incident on the resonator 50. The transmission waves 12b proceeding in the negative direction of the Z-axis are incident on the conductor surface 41 of the battery 40. The transmission waves 12a are reflected by the conductor surface 41 and proceed in the positive direction of the Z-axis as reflected waves 44. The phase difference between the reflected waves 44 and the transmission waves 12a is approximately 180°. In FIG. 8, the positive direction of the Z-axis is the direction from right to left.

When the distance between the antenna 10 and the conductor surface 41 is short enough to be negligible relative to 1/4 of the wavelength of the transmission waves 12, the phase of the reflected waves 44 reflected by the conductor surface 41 may be considered to be the same as the phase of the reflected waves 44 reaching the antenna 10. In this case, the phase difference between the transmission waves 12c proceeding in the positive direction of the Z-axis and the reflected waves 44 that reach the antenna 10 and continue in the same direction as the transmission waves 12c can be nearly 180°. Consequently, the transmission waves 12c and the reflected waves 44 weaken each other. The intensity of the transmission waves 12 emitted from the antenna 10 may weaken as a result of the transmission waves 12c and the reflected waves 44 weakening each other.

The distance that the electromagnetic waves travel from the antenna 10 to the conductor surface 41 and back is 1/2 of the wavelength of the transmission waves 12 when the distance between the antenna 10 and the conductor surface 41 is 1/4 of the wavelength. In this case, the phase shifts by 180° while the electromagnetic waves travel from the antenna 10 to the conductor surface 41 and back. This 180° shift in phase due to reflection at the conductor surface 41 causes the transmission waves 12c and the reflected waves 44 to intensify each other. In other words, even when the communication apparatus 1 does not include the resonator 50, the transmission waves 12 from the antenna 10 can be intensified by setting the distance between the antenna 10 and the conductor surface 41 to 1/4 the wavelength of the transmission waves 12. For example, 1/4 of the wavelength of the transmission waves 12 is approximately 30 mm when the frequency of the transmission waves 12 is 2.5 GHz. The height of the battery 40 is often less than 5 mm when the battery 40 is a button cell.

The size of the communication apparatus 2 in the Z-axis direction may become larger than the height of the battery 40 when the distance between the antenna 10 and the conductor surface 41 is designed so that the transmission waves 12c and the reflected waves 44 intensify each other. When the resonator 50 is not included, the grounding state of the conductor surface 41 can easily change as a result of a human body or the like approaching or coming into contact with the communication apparatus 2. The phase of the reflected waves 44 can easily change in response to a change in the grounding state of the conductor surface 41. Consequently, the intensity of the transmission waves 12 tends to become unstable.

In the communication apparatus 2 according to the Comparative Example, which does not include the resonator 50, it is difficult both to intensify the transmission waves 12 from the antenna 10 and to reduce the communication apparatus 2 in size. Consequently, the intensity of the transmission waves 12 tends to become unstable in the communication apparatus according to the Comparative Example.

In the communication apparatus 2 according to the Comparative Example, the effect of the conductor surface 41 on the transmission waves 12 can be reduced by disposing an insulating layer between the antenna 10 and the conductor surface 41. The insulating layer tends to be thicker than the resonator 50. In other words, it is also difficult to reduce the communication apparatus 2 according to the Comparative Example in size when providing an insulating layer in the communication apparatus 2.

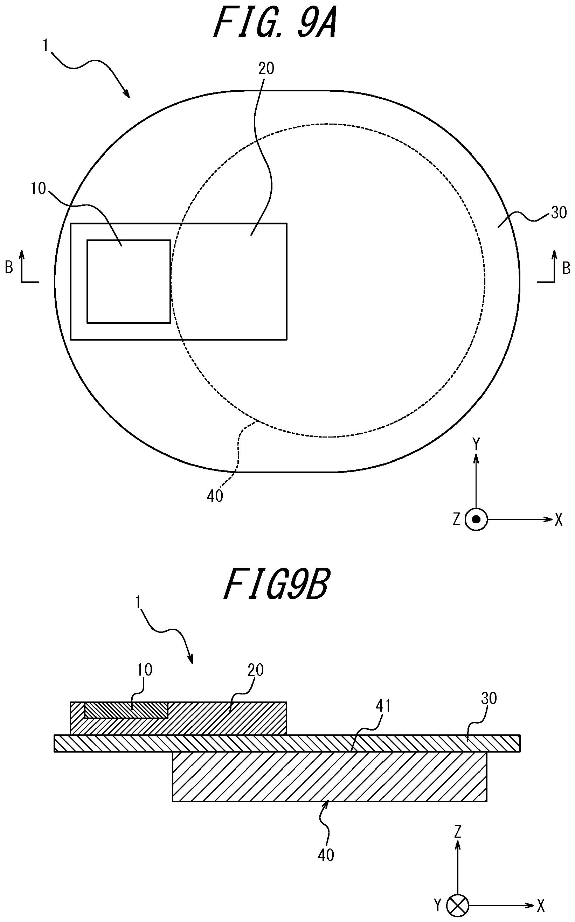

As illustrated in FIGS. 9A and 9B, the communication apparatus 1 according to an embodiment may be configured so that the antenna 10 and the conductor surface 41 of the battery 40 do not overlap. This configuration can attenuate the reflected waves 44 produced by reflection of the transmission waves 12 emitted from the antenna 10, regardless of whether the communication apparatus 1 includes the resonator 50. The intensity of the transmission waves 12 is then less likely to decrease, because the transmission waves 12 tend not to be weakened by the reflected waves 44.

Even when the conductor surface 41 and the antenna 10 included in the communication apparatus 1 are shifted away from each other, the antenna 10 may overlap a conductor positioned outside of the communication apparatus 1. By including the resonator 50, the communication apparatus 1 can stabilize fluctuation in the intensity due to conductors located nearby.

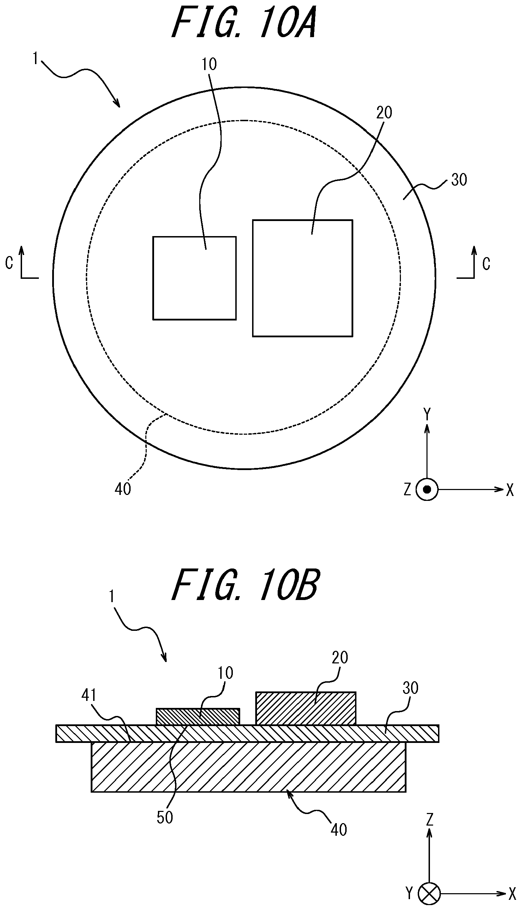

As illustrated in FIGS. 10A and 10B, the antenna 10 and the wireless module 20 may be mounted as separate components in the communication apparatus 1 according to an embodiment. The antenna 10 and the wireless module 20 may be mounted on the substrate 30. The resonator 50 may be provided on the surface of the antenna 10 facing the battery 40. The resonator 50 may have an area equivalent to the area of the antenna 10 or may have a larger area. The resonator 50 may be provided in the substrate 30. The resonator 50 may be provided on the first surface 41 of the battery 40.

Provision of the antenna 10 and the wireless module 20 as separate components can increase the degree of freedom for arrangement of the antenna 10.

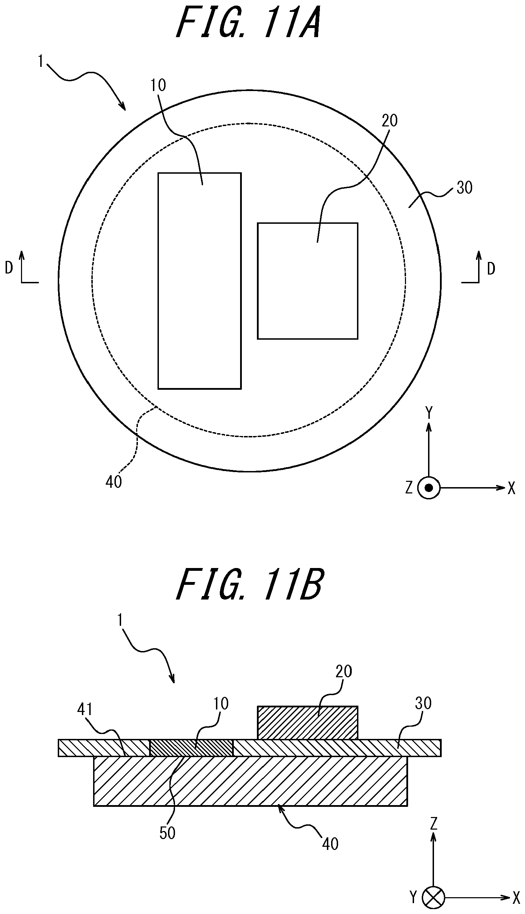

As illustrated in FIGS. 11A and 11B, the antenna 10 may be included in the substrate 30 in the communication apparatus 1 according to an embodiment. The resonator 50 may be provided on the surface of the substrate 30 on the battery 40 side. The resonator 50 may have an area equivalent to the area of the antenna 10 or may have a larger area. The resonator 50 may be provided on the first surface 41 of the battery 40.

Inclusion of the antenna 10 in the substrate 30 can increase the area of the antenna 10.

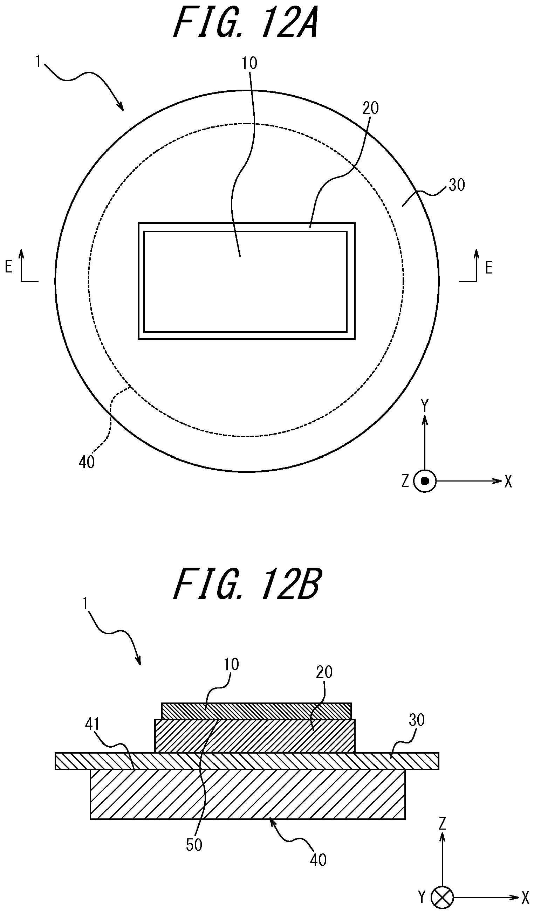

As illustrated in FIGS. 12A and 12B, the antenna 10 and the wireless module 20 may be stacked in the communication apparatus 1 according to an embodiment. The resonator 50 may be provided on the surface of the antenna 10 on the battery 40 side. The resonator 50 may have an area equivalent to the area of the antenna 10 or may have a larger area. The resonator 50 may be provided in the wireless module 20 or the substrate 30. The resonator 50 may be provided on the first surface 41 of the battery 40.

Stacking the antenna 10 on the wireless module 20 can increase the area of the antenna 10.

Configurations according to the present disclosure are not limited to the above embodiments, and a variety of modifications and changes are possible. For example, the functions and the like included in the various components may be reordered in any logically consistent way. Furthermore, components may be combined into one or divided.

The drawings illustrating configurations according to the present disclosure are merely schematic. The dimensional ratios and the like in the drawings do not necessarily match the actual dimensions.

The references to "first", "second", and the like in the present disclosure are identifiers for distinguishing between the corresponding elements. The numbers of elements distinguished by references to "first", "second", and the like in the present disclosure may be switched. For example, the identifiers "first" and "second" of the first frequency and the second frequency may be switched. Identifiers are switched simultaneously, and the elements are still distinguished between after identifiers are switched. The identifiers may be removed. Elements from which the identifiers are removed are distinguished by their reference sign. Identifiers in the present disclosure, such as "first" and "second", may not be used in isolation as an interpretation of the order of elements or as the basis for the existence of the identifier with a lower number.

In the present disclosure, the X-axis, Y-axis, and Z-axis are provided for the sake of explanation and may be interchanged. Configurations according to the present disclosure have been described using an orthogonal coordinate system constituted by the X-axis, Y-axis, and Z-axis. The positional relationships between elements according to the present disclosure are not limited to orthogonal relationships.

### REFERENCE SIGNS LIST

- 1, 2: Communication apparatus
- 10: Antenna
- 12: Transmission waves
- 20: Wireless module
- 30: Substrate
- 32: Control device
- 34: Memory device
- 40: Battery
- 41: First surface (conductor surface)
- 42: Second surface
- 43: Side surface
- 44: Reflected waves
- 50: Resonator
- 52: Reflected waves
- 55: Unit conductor
- 56: Conductor layer

## Claims

1. A communication apparatus comprising:
an antenna;
a wireless module configured to supply power to the antenna to cause the antenna to emit electromagnetic waves having a predetermined frequency band;
at least one structural member having a conductor surface on at least a portion of the at least one structural member; and
at least one resonator comprising a plurality of unit conductors, and having a resonance frequency band that includes a resonance frequency, the at least one resonator positioned between the conductor surface and the antenna; and
wherein the predetermined frequency band is included in the resonance frequency band.

2. The communication apparatus of claim 1, wherein
the resonance frequency is included in the predetermined frequency band.

3. The communication apparatus of claim 1 or 2, wherein
a plurality of the resonators is positioned between the antenna and the conductor surface.
